# EUROPEAN PATENT APPLICATION

(11) **EP 0 718 839 A2**
(43) Date of publication of application: **26.06.1996**
(21) Application number: 95111083.2
(22) Date of filing: 14.07.1995
(51) Int. Cl.: G11B 19/20, G11B 33/08

(54) **Balanced hard disk assembly and method for balancing**

(30) Priority: 23.12.1994 US 363165
(71) Applicant: Hewlett-Packard Company, Palo Alto, California 94304 (US)
(72) Inventor: Peter, Gary M., Boise, Idaho 83709 (US)
(74) Representative: Schoppe, Fritz, Dipl.-Ing.

(57) **Abstract**

A balanced hard disk assembly (8) for a disk drive (5) has a disk motor rotor (12) for a disk assembly body (12) to which the hard disk (13) is concentrically secured. The disk motor rotor (12) is of a magnetizable material. The hard disk assembly (8) is balanced by a mass of metallized adhesive applied at a radial and circumferential location (25) on the disk motor rotor in an axial plane of the disk assembly which at least substantially statically balances the hard disk assembly (8).

## Description

### Technical Field

This invention relates generally to hard disk drives and particularly to a balanced hard disk assembly and the method of fabrication thereof.

### Background Art

As density of recording on disks on disk drives and the disk speeds are increased, the demand on the transducer in reading and writing modes has increased. As magnetic and mechanical dimensional tolerances are reduced the demands upon mechanical performance are increased. High on this list of demands is the requirement for smoothness of operation. Running frequency vibration can seriously degrade the transducing function. Running frequency vibration is caused by unbalance of the disk assembly. All disk stack assemblies are carefully fabricated. Parts are fabricated with high precision and equally precise assembly jigs provide precise positioning for assembly. Unbalance is usually minimal in such a fabrication practice, but for best performance correction for unbalance is still required.

Thus a balancing machine is indicated. In single or dual disk assemblies, static balancing may be adequate, particularly in applications where the spindle of the disk assembly is supported at both ends, one at the disk drive base and the other at the cover. As the disk drives are reduced in size, the attachment of balancing weights becomes increasingly difficult for lack of space and lack of attachment means.

### SUMMARY OF THE INVENTION

A disk assembly is balanced by applying a quantity of a fluid adhesive or other fluid bonding agent to a disk assembly, comprising a disk assembly body and at least one disk concentrically secured to the disk assembly body. A calculated quantity of the fluid adhesive is preferably applied to the disk assembly body at a single location which is at a predetermined radial and calculated circumferential position in an axial plane close to or including the center of gravity of the disk assembly, to achieve a static balance, or, to apply respective calculated quantities of a fluid adhesive or bonding adhesive at a predetermined radius and a calculated circumferential position in each of two axial planes in the disk assembly body, for the purpose of achieving dynamic balance. A balancing machine is employed, for either static or dynamic balancing, to calculate the amount of weight required and the angular or circumferential position of the weight on the disk assembly body.

Alternatively the disk assembly may be balanced using a fixed quantity or weight of fluid adhesive or bonding agent. In such circumstance, the balancing machine calculates the radius and the angular position on the disk assembly body or other part of the disk assembly, for placement of the fixed weight of fluid adhesive.

In the best mode presently known for practicing this invention, a metallized fluid adhesive is employed. Fixed quantities of the metallized fluid adhesive may be employed at calculated radii, or, may be a discrete incremental part of a calculated weight to be applied at a fixed radius, in which latter case, successive discrete incremental quantities of the metallized adhesive are deposited at the selected location to add up to the required weight at that location. In still another application an injection device having a plunger of known cross-section may be adjusted as to plunger stroke to provide the desired quantity and weight of the metallized adhesive for a particular application.

Fluid, as used here is intended to define an injectable, formable mass of sufficient plasticity to substantially retain a shaped globular configuration when deposited and which is curable in substantially that globular configuration.

### BRIEF DESCRIPTION OF THE DRAWINGS

The invention will be better understood by referenced to the following specification when considered in conjunction with the accompanying drawings, in which:
Fig. 1 is a plan view of a hard disk drive;
Fig. 2 is an enlarged sectional view of the hard disk drive taken in the section plane II of Fig. 1;
Fig. 3 illustrates an arrangement for balancing a disk assembly in an assembled disk drive, and
Fig. 4 illustrates an arrangement for balancing a disk assembly independently of a disk drive.

### BEST MODE FOR PRACTICING THE INVENTION

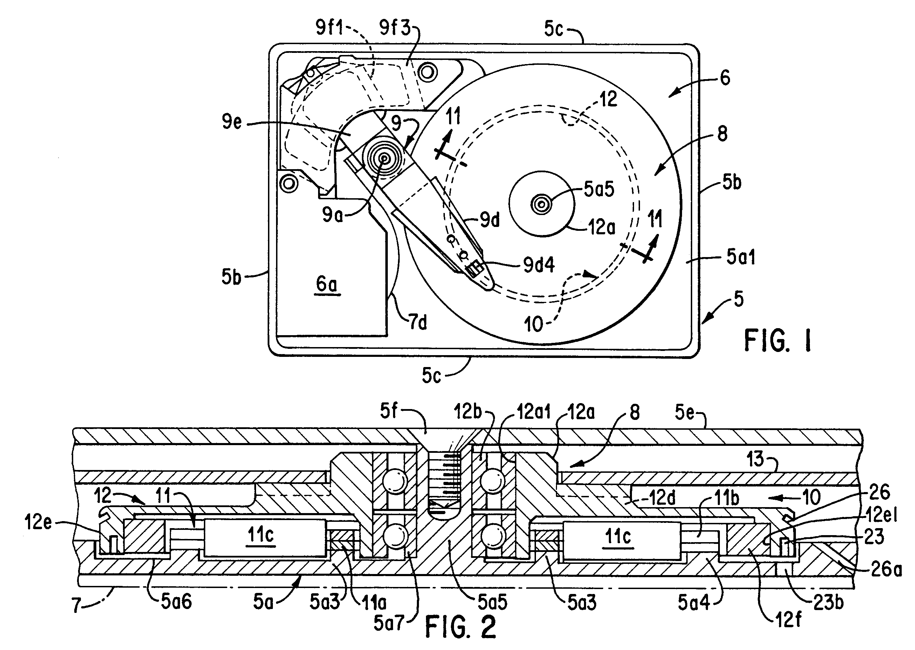

Figs. 1 and 2 illustrate, respectively, plan and sectional views of a small form factor hard disk drive. These figures are not drawn to scale. Fig. 2 is an enlargement of Fig. 1, to permit the illustration of essential detail of the disk assembly.

A main frame or base structure 5 of metal, such as aluminum, has a base plate 5a, end walls 5b, and side walls 5c. A cover 5e is secured, as by adhesive bonding, to the upper edges of the end walls 5b and the side walls 5c of the base or main frame 5 to seal the assembly. The hard disk drive 6 comprises a hard disk assembly 8 and rotary actuator assembly 9. The rotary actuator assembly 9 is journaled on a spindle 9a which is mounted to the base and which comprises at least one arm structure 9d which mounts a magnetic head 9d4 at its distal end. An axial gap actuator motor 9e is mounted on the actuator assembly 9. This actuator motor, as is well known, controls the rotary actuator assembly 9 to move the magnetic head 9d4 in track seeking and track following modes of operation.

The hard disk assembly 8, comprises the rotor of a radial gap, direct current disk motor 10 which has a salient pole stator 11 and an umbrella shaped disk motor rotor 12. A hard disk 13 is secured to the disk motor rotor 12. The umbrella shaped disk motor rotor 12 has a cylindrical section 12a, which mounts the hard disk. The disk motor rotor functions as the disk assembly body of the disk assembly 8. The disk motor rotor 12 is journaled by a coaxial bearing pair 12b, called a bearing cartridge, on the spindle 5a5, shown as an integral part of the base plate 5a. The disk motor rotor 12 has a concentric, cylindrical bore 12a1 in the cylindrical section 12a, in which the bearing cartridge 12b is secured. The bearing cartridge is also secured to the motor spindle 5a5. A flat annular, axial face 12c, concentrically formed about the cylindrical section 12a, provides a supporting surface for the hard disk 13. The hard disk 13 is adhesively bonded to the axial face 12c of the motor rotor 12.

The disk motor rotor 12 is of a magnetic flux conducting material, such as steel. A depending annular rim 12e on the disk motor rotor 12 has mounted on its inner peripheral face 12e1 a ring 12f of magnetic material which is radially spot magnetized in alternately poled, equally circumferentially spaced locations. The permanent magnet field of the rotor interacts with the electromagnetic field of the salient pole stator to produce rotation of the rotor and the disk secured thereto at a constant speed.

A balanced disk assembly is indispensable in the disk drive. All parts are fabricated to close tolerances, but, even with careful fabrication and assembly, the disk assembly may exhibit unbalance in a degree which produces vibration and objectionable noise in the cabinet in which it is installed, possibly reaching vibration excitation levels adversely impacting on the read/write function. As a step in manufacture and assembly of the disk drive, balancing of the disk assembly 8, including the disk 13 and the disk motor rotor 12, which latter functions as the disk assembly body, is indicated.

A two plane balancer for balancing a rotatable member in both the radial and axial planes of the rotatable member or body is employed. Such balancers typically provide an indication of the amount of weight and the angular or circumferential position of the weight on the body, for a given radius, in each of two fixed axially spaced planes on the body. The given fixed radii in these respective planes need not be the same. Such balancing equipment being old and well known is not further described as to functional detail.

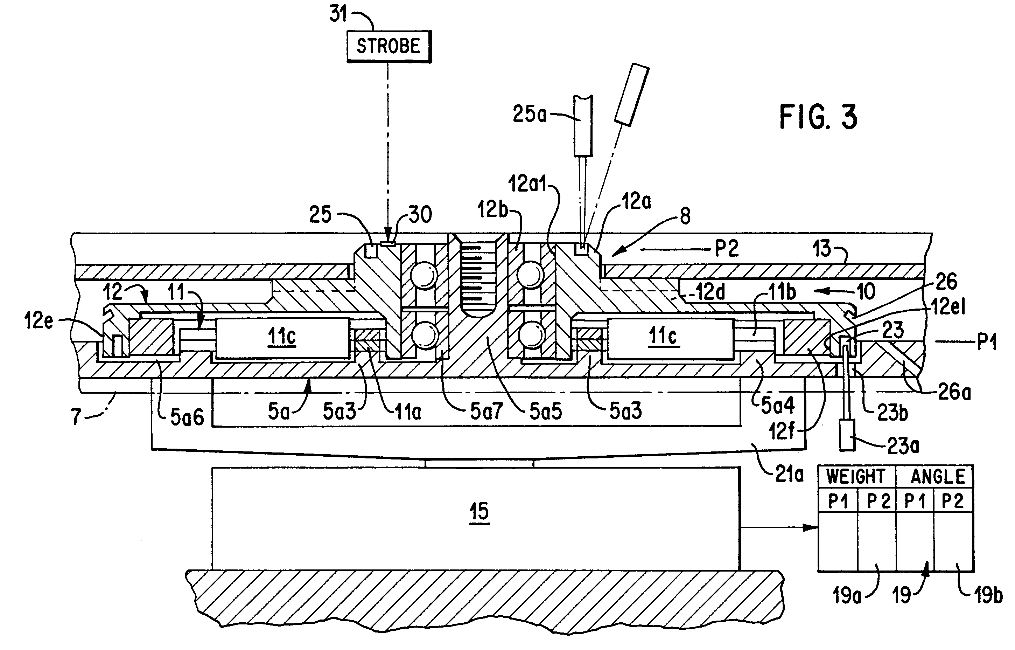

In Fig. 3, the balancing equipment 15 is illustrated only as to its housing 17, display 19 and pedestal 21 on which the body to be balanced is mounted.

Balancing of the disk assembly of an assembled disk drive of the type of Figs. 1 and 2 without the cover in place, is seen in Fig 3. A mark 30 anywhere on the disk assembly, preferably on the hub 12a, in a position radially displaced from the axis, preferably at a peripheral edge of the hub, is employed as the angular index and is strobed during balancing by a strobe unit 31. The balancing machine 15 includes a support or pedestal 21a which has angular freedom about orthogonal axes normal to the spin axis of the disk assembly. The assembled disk drive is mounted on the support 21a with the spin axis of the disk assembly perpendicular to the plane of the orthogonal axes and intersecting the orthogonal axes at their intersection. The disk motor rotor spins the disk assembly at an acceptable balancing speed, usually the disk operating speed or higher. Oscillation of the support 21a of the balancing machine 15 about the orthogonal axes and strobing of the disk assembly synchronously at disk rotational speed, provide indications of the magnitude of the mass unbalance and the angle of the mass unbalance, which are displayed by the display 19.

In a disk drive, such as seen in Fig. 2, or Fig. 3, there may be no useful location on the upper surface of the disk assembly at which to apply a balance weight. The disk motor rotor 12 therebeneath, however, being of significant mass near the axial center of gravity, offers an ideal location for applying a balance weight. A circumferential slot, or groove 23 or 26, is formed in the rim of the disk motor rotor. A hole 26a through the base 5a is aligned with the circumferential slot 26. Balancing is preferably performed prior to attachment of the printed circuit board to the base 5a of the disk drive. A hypodermic type of injector, 23a applies the balancing fluid in the circumferential slot 23 through a hole 23b in the base 5a, after which the hole 23b is sealed. Alternatively, circumferential slot 26 and hole 26a may be used. This balancing procedure locates the circumferential slot 23 or 26 as close as possible to the plane of the axial center of gravity of the disk assembly to provide an acceptable static balance which closely approximates a dynamic balance. Assembly of the disk drive is completed by sealing the hole in the base 5a, attaching the printed circuit board 7 and attaching the cover 5e.

When only a static balance is performed, it is desirable that the attachment of the balance weight be as close as possible to the axial plane of the disk assembly which contains the center of gravity, to minimize torques on the disk assembly about an axis normal to the spin axis during rotation of the disk assembly, which would tend to stress and deflect the body and or the disks of the disk assembly or its bearing mount.

Referring to the disk assembly 8 in the balancing machine 15 in Fig. 3, if dynamic balance is desired, the locations of the balancing weights, are ideally at maximum axial separation within the axial limits of the body of the disk assembly and at maximum radius. Maximum axial separation is represented in an annular groove 23 in the bottom face of the depending annular rim 12e of the disk motor rotor 12, and in an annular groove 25 in the upper face of the cylindrical section 12a of the disk motor rotor 12. These are planes P1 and P2, respectively. Since balancing weights may not be attached to the disk 13, the annular groove 25 represents the maximum radius at that axial location, that is, balancing plane P2, on the disk motor rotor 12.

In dynamic balancing, the balancing machine provides indications of the magnitude of the balancing weight required on the body being balanced in a specific angular position at a particular radius, in each of the two axial planes. These planes are marked P1 and P2, in Fig. 3. The weight in each balancing plane and the angle in each balancing plane are displayed in the weight and angle windows 19a, 19b of the display 19 of the balancing machine 15.

The addition of weight (or removal of weight) for balancing a disk assembly 8, particularly in small form factor disk drives, poses many problems. The removal of mass produces debris, some of which may be trapped in the disk assembly to cause operational malfunction at some point in time after assembly of the disk drive. The addition of minute solid weights is not easily accomplished for want of attachment means. Close tolerances also negate adhesively bonding discrete weights to any surface of the disk assembly.

A solution to this problem is found in the best mode for practicing this invention in the use of a fluid adhesive, which may be a metalized fluid adhesive, that cures rapidly in the environment or, that may be cured rapidly when subjected to some curing treatment appropriate for the adhesive, for example, ultraviolet radiation. The metallized fluid adhesive comprises finely divided particles, small granules or powder, of a heavy metal, such as lead, suspended in an adhesive fluid such as a two part epoxy. The application of measured quantities of the fluid adhesive or the metallized fluid adhesive is accomplished by injection into a cavity such as a circumferential groove 23 or 25, using a hypodermic type of injection mechanism 23a, 25a under manual or robotic control. The disk assembly is rotated to an angular position in reference to plane P1, or plane P2, corresponding to that which is displayed. When that angular position is achieved, the adhesive, in the quantity required at that location to provide the required balancing weight, compensated for any weight loss in curing, is applied or injected into a groove 23 or 25, depending upon the selected plane P1 or P2. If ultraviolet curing is required, ultraviolet radiation is provided by radiation sources 23b, 25b.

Dispensing the correct quantity of adhesive to obtain an indicated weight is accomplished in dispensers 23a and 25a, which, according to one embodiment of this invention, dispense an adhesive in discrete small quantities in successive injections until the required quantity to achieve a cured adhesive weight for balancing the disk assembly is achieved, a discrete quantity being the smallest quantity required to balance the disk assembly at the unbalance threshold at which balancing is required. Alternatively, instead of a cavity defined by an annular groove 23 or 25, as shown, discrete holes in an annular array may provide discrete volume cavities, one or more, at and about the balancing weight angle, being injected with adhesive to provide the required balancing weight. In the best mode for practicing this invention, the diameter of the dispenser 23a, 25a being known the correct quantity of fluid adhesive in injected in a single plunger stroke of calculated length.

For dynamic balancing, the procedures aforesaid are repeated in each balancing plane P1 and P2. It is possible, however, with a disk assembly 8, as illustrated, of one or two disks and of small axial dimension, having accessible circumferential parts close to or, ideally, at the axial plane of the center of gravity, to satisfactorily balance the disk assembly using only a static balance. A groove, such as the circumferential groove 23 or 26, if not actually in the center of gravity plane of the body, may be sufficiently close to that axial plane of the body containing the center of gravity to permit acceptable static balancing. The balancing machine 15 is now set for static balancing display and, in this case, produces a balance weight indication for weight to be added at the radius of the circumferential groove 26, at a particular angular position without regard to axial disposition.

Thus, for static balancing, assuming a frictionless bearing, the indicated balancing weight may be disposed in any axial plane at the fixed radius of the groove 23 or 26 and the disk assembly would remain in any angular position in which it was placed about the axis of the frictionless bearing. By placing the weight in the proper circumferential location in the groove 26, either at or close to the axial plane of the center of gravity, the dynamic torque component of the balancing weight in rotation about an axis normal to the axis of rotation, is either zero or minimal, and, at least a close approximation of a dynamic balance is achieved.

Adhesives which cure anerobicablly, or in the presence of heat or ultraviolet radiation, are acceptable in this application. Specific desirable properties are listed below:
1. Minimal or zero long term out gassing in the disk drive environment.
2. Long fluid/plastic pot life either as a single or a two part adhesive.
3. Quick curing, preferably in the ambient environment, otherwise in the presence of curing treatment, such as heat, air, ultraviolet exposure, etc.
4. Capable of high density suspension of finely divided metal particles, uniformly distributed in the adhesive.
5. Strong bond per unit area to withstand the centrifugal force in tension or in shear.

A specific adhesive or bonding agent which is acceptable for this purpose is a two part epoxy. This epoxy strongly bonds to steel such as that of the motor rotor 12. Metallic particles, fine granules or powder, if used, are mixed with the resin and the setting fluid is mixed with the resin in the step of forming a discrete quantity of metallized adhesive, in preparation for its injection into a groove or hole 23, 25, 26.

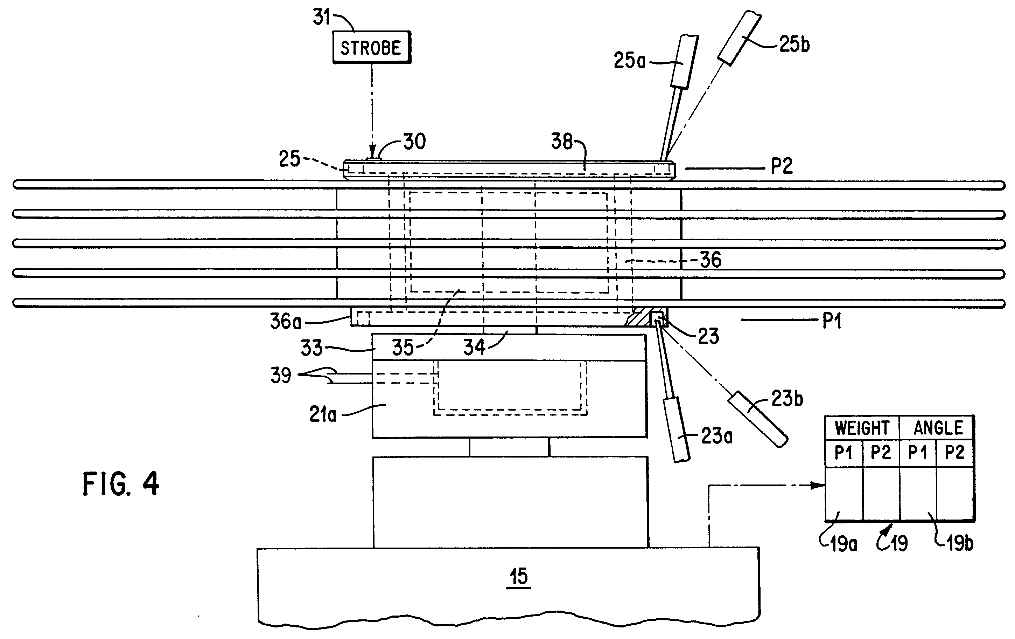

In some types of disk drives, the disk assembly is assembled as a module which is separate from the disk drive housing. Such a disk assembly is seen in Fig. 4. This disk assembly comprises a flanged base 33 which mounts a disk spindle 34. A disk motor stator 35, seen in dotted outline, is mounted to the disk spindle 34. The cylindrical motor rotor 36 is journaled on the disk spindle at axial locations above and below the stator 35. The disks 37 are stacked on the flange 36a of the motor rotor 36 and are axially spaced by spacer rings 37. A clamp 38 secured to the top of the motor rotor 36 clamps the disk and spacer ring assembly stack against the flange 36a.

The flanged base 33 of the disk assembly is mounted to the pedestal 21a of the balancing machine 15. The wires 39 for the motor are brought out through the pedestal 21a. The disk stack is spun preferably at disk operating speed by the disk spindle motor.

Balancing of the disk assembly is performed as described for Fig. 3. For this purpose, parts in Fig. 4, corresponding to those of Fig. 3, referenced for balancing, bear reference characters like those of Fig. 3.

While the invention has been disclosed, employing a specific disk assembly, it will be appreciated that the principles of this invention are applicable to differently configured disk assemblies and may employ other adhesives or bonding agents rather than those referenced herein. Also automation is applicable in all phases of the balancing operation.

Balancing procedures described herein are also applicable to a completely assembled disk drive, that is, one to which the cover is attached.

## Claims

1. A balanced hard disk assembly (8) for a disk drive, comprising:
a. a disk assembly body (12);
b. a memory disk (13) concentrically secured to said disk assembly body (12), and
c. a mass of fluid/plastic adhesive, positioned and secured at a radial and circumferential position (23, 25, 26) on said disk assembly body (12) for at least substantially statically balancing said hard disk assembly (8), said mass of fluid/plastic adhesive in fluid/plastic state which is applied to said disk assembly body (12) is greater than the mass required to balance the disk assembly by the amount of loss in mass in the cured state.

2. The balanced hard disk assembly according to claim 1, in which:
a. said fluid/plastic adhesive comprises a two part epoxy.

3. The balanced hard disk assembly according to claim 1, in which said disk assembly body comprises:
a. a disk motor rotor (12) of magnetic material, and
b. said adhesive mass is disposed at a predetermined circumferential position (26) on said disk motor rotor (12) adjacent the periphery thereof in an axial plane substantial at the axial plane including the center of gravity of said hard disk assembly (12).

4. The balanced hard disk assembly according to claim 1, in which said disk assembly body comprises:
a. a peripheral groove in said disk (12) assembly body, and
b. said adhesive mass is disposed at a predetermined circumferential location in said peripheral groove (25) for at least statically balancing said hard disk assembly.

5. A method for at least statically balancing a motor powered hard disk assembly (8) in which a memory disk (13) is secured to a disk assembly body (12) comprising:
a. spinning said hard disk assembly (8) with said motor at substantially constant balancing speed;
b. obtaining an indication of the mass required to balance said hard disk assembly (8) at a fixed radial (23, 25, 26) position on said disk assembly body (12);
c. obtaining an indication of the circumferential location on said disk assembly body (12) whereat said mass is to be positioned at said radius, and
d. applying a quantity of fluid/plastic adhesive to said disk assembly body (12) at said radial/circumferential position (25), having a mass for at least statically balancing said hard disk assembly (8).

6. The method for at least statically balancing a hard disk assembly, according to claim 5, comprising:
a. compensating the loss of mass of the adhesive from the fluid/plastic state to the cured state, by increasing the mass of the adhesive in the fluid/plastic state by the loss of mass of the adhesive in the cured state.

7. A method for balancing a hard disk assembly (8) mounted in the housing of a disk drive (5), the hard disk assembly (8) comprising a disk motor having a disk motor stator (11) secured to said housing and having a disk motor rotor (12) with at least one attached disk, the disk motor rotor being rotatably mounted to said housing for rotation about an axis and having a rim encircling said stator, comprising the steps of:
a. providing a circumferential groove (23) in said rim;
b. providing an opening (23a) in said housing (5a) for accessing said circumferential groove (23);
c. providing an index mark (30) on said hard disk assembly (8) radially displaced from said axis;
d. mounting said housing (5a) of said disk drive (5) to a balancing pedestal (21a) of a balancing machine (15);
e. spinning said hard disk assembly (8) with said disk motor rotor (12) at a balancing speed;
f. determining the magnitude of mass unbalance with respect to said circumferential groove (23) and the angle of mass unbalance with respect to said index mark (30) while said hard disk assembly (8) is spinning;
g. stopping spinning of said hard disk assembly (8);
h. rotating said hard disk assembly (8) using said index mark to angularly position said hard disk assembly (8) with the point at which balancing mass is to be added to said circumferential groove (23) in said rim of said disk motor rotor positioned at said opening in said housing, and
i. injecting a quantity of a fluid adhesive into said groove (23) at said point, said quantity of fluid adhesive having a mass for at least statically balancing said hard disk assembly (8).

8. The method of balancing a hard disk assembly according to claim 7, in which the step of injecting a quantity of fluid adhesive comprises:
a. inserting a tube through said opening (23a) in said housing (5a) into said circumferential groove (23) and injecting said quantity of said metallized fluid adhesive through said tube into said circumferential groove (23).

9. The method of balancing a hard disk assembly according to claim 8, comprising the additional step of:
a. subjecting said quantity of said fluid adhesive in said circumferential groove (23) to ultraviolet radiation through said opening (23a) in said housing (5a) for setting said adhesive.

10. The method of balancing a hard disk assembly according to claim 8, comprising the additional step of:
a. subjecting said quantity of said fluid adhesive in said circumferential groove (23) to heated air through said opening (23a) in said housing (5a) for setting said adhesive.
